(19) Europäisches Patentamt
European Patent Office
Office européen des brevets

(11) EP 2 878 626 B1

(12) **EUROPÄISCHE PATENTSCHRIFT**

(45) Veröffentlichungstag und Bekanntmachung des Hinweises auf die Patenterteilung:
**27.10.2021 Patentblatt 2021/43**

(51) Int Cl.:
***C08L 67/02*** *(2006.01)* ***C08K 3/34*** *(2006.01)*
***C08K 7/14*** *(2006.01)* *C08K 9/06* *(2006.01)*

(21) Anmeldenummer: **13194640.2**

(22) Anmeldetag: **27.11.2013**

(54) **VERWENDUNG VON POLYESTER-ZUSAMMENSETZUNGEN**

USE OF POLYESTER COMPOSITIONS

UTILISATION DES COMPOSITIONS DE POLYESTER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.06.2015 Patentblatt 2015/23**

(73) Patentinhaber: **LANXESS Deutschland GmbH**
**50569 Köln (DE)**

(72) Erfinder:
- **ENDTNER, Jochen**
  **50679 Köln (DE)**
- **IMMEL, Timo**
  **41539 Dormagen (DE)**
- **BIENMÜLLER, Matthias**
  **47803 Krefeld (DE)**

(56) Entgegenhaltungen:
**EP-A1- 2 472 603 US-A- 4 874 809**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 878 626 B1

Printed by Jouve, 75001 PARIS (FR)

## Beschreibung

Die Erfindung betrifft die Verwendung von Zusammensetzungen enthaltend Polyethylenterephthalat (PET), Poly(1,4-cyclohexandimethanolterephthalat (PCT), Talkum und Glasfasern zur Steigerung der Kurzzeitwärmebeständigkeit von Erzeugnissen.

Viele elektronische und elektrische Baugruppen und Komponenten umfassen temperaturempfindliche elektrische und/oder elektronische Erzeugnisse, insbesondere wärmeempfindliche integrierte Schaltkreise, Lithiumbatterien, Oszillatorkristalle, sowie optoelektronische Erzeugnisse. Im Zuge der Montage einer solchen Baugruppe müssen die an den Erzeugnissen vorgesehenen elektrischen Kontakte prozesssicher mit Leiterbahnen einer Platine und/oder mit elektrischen Kontakten anderer Erzeugnisse verbunden werden. Diese Montage erfolgt häufig mit Hilfe eines Lötverfahrens, bei dem am Erzeugnis vorgesehene Lötanschlüsse mit der Platine verlötet werden. Für jedes Erzeugnis ergibt sich dabei ein sicherer Bereich für die Lötzeit und Löttemperatur, in der gute Lötverbindungen hergestellt werden können. Um ein gutes Lötergebnis zu erreichen, müssen die Erzeugnisse während des Lötens über längere Zeiten hinweg erhöhten Temperaturen ausgesetzt werden. So wird z.B. beim Wellenlöten das auf die Platine gesteckte Erzeugnis zunächst langsam auf etwa 100-130° C Grad aufgewärmt. Danach erfolgt die eigentliche Lötung, die typischerweise bei 260 bis 285° C Grad erfolgt und mindestens 5 Sekunden dauert, gefolgt von der Erstarrungsphase, während das Erzeugnis über mehrere Minuten langsam abkühlt.

Gemäß "http://de.wikipedia.org/wiki/Wellenl%C3%B6ten" ist das Wellenlöten, auch als Schwalllöten bezeichnet, ein Lötverfahren, mit dem elektronische Baugruppen (Leiterplatten, Flachbaugruppen) halb- oder vollautomatisch nach dem Bestücken gelötet werden. Die Lötseite der Leiterplatte wird zunächst im Fluxer mit einem Flussmittel benetzt. Danach wird die Leiterplatte mittels Konvektionsheizung (Verwirbelung der Wärme, wodurch praktisch überall, auch auf der Oberseite, die gleiche Temperatur anliegt), Wendelheizung oder Infrarot-Strahlern vorgeheizt. Dies geschieht zum einen, um den Lösungsmittelanteil des Flussmittels zu verdampfen (sonst Blasenbildung beim Lötvorgang), die chemische Wirkung der Aktivatoren zu erhöhen und um einen Temperaturverzug der Baugruppe sowie Schädigung der Bauteile durch einen zu steilen Temperaturanstieg beim nachfolgenden Löten zu vermeiden. In der Regel wird eine Temperaturdifferenz von unter 120 °C gefordert. Das bedeutet, dass bei einer Löttemperatur von 250 °C die Platine auf mindestens 130 °C aufgewärmt werden muss.

Genaue Daten ergeben sich durch Temperaturprofile. Dabei werden an einer Musterplatine Temperaturfühler an relevanten Punkten angebracht und mit einem Messgerät aufgezeichnet. So erhält man Temperaturkurven für die Platinenober- und unterseite für ausgewählte Bauteile. Im Anschluss daran wird die Baugruppe über eine oder zwei Lötwellen gefahren. Die Lötwelle wird durch Pumpen von flüssigem Lot durch eine Öffnung erzeugt. Die Löttemperatur liegt bei bleihaltigen Loten bei ca. 250 °C, bei den wegen der Verhinderung bleihaltiger Dämpfe bevorzugt bleifreien Loten ca. 10 °C bis 35 °C höher, also bei 260 °C bis 285 °C.

Die Lötzeit ist so zu wählen, dass die Erwärmung weder die Leiterplatte noch die wärmeempfindlichen Bauelemente schädigt. Die Lötzeit ist die Berührzeit des flüssigen Lotes pro Lötstelle. Die Richtzeiten betragen für einseitig kaschierte Leiterplatten weniger als eine Sekunde und bei zweiseitig kaschierten Leiterplatten nicht mehr als zwei Sekunden. Bei Mehrleiterplatten gelten individuelle Lötzeiten bis hin zu sechs Sekunden. Nach DIN EN 61760-1: 1998 ist die maximale Zeit für eine oder auch zwei Wellen zusammen 10 Sekunden. Genauere Details sind der oben genannten Literaturstelle zu entnehmen. Nach dem Löten ist eine Kühlung der Baugruppe sinnvoll, um die thermische Belastung schnell wieder zu verringern. Dies geschieht über eine direkte Kühlung durch ein Kühlaggregat (Klimaanlage) unmittelbar nach dem Lötbereich und/oder durch konventionelle Lüfter in der Senkstation oder einem Kühltunnel im Rücklaufband.

Hieraus ergeben sich an die verwendeten Materialien, insbesondere für die aus ökologischen Gründen immer häufiger einzusetzenden bleifreien Lote mit erhöhten Schmelzbereichen, hohe Anforderungen hinsichtlich der Kurzzeitwärmeformbeständigkeit. Des Weiteren müssen derartige Materialien eine sehr gute Alterungsbeständigkeit unter den bei der Anwendung auftretenden Temperaturen haben.

Thermoplastische Polyester wie Polybutylenterephthalat (PBT) und Polyethylenterephthalat (PET) sind wegen ihrer guten Verarbeitbarkeit, der geringen Wasseraufnahme und der damit verbundenen hohen Dimensionsstabilität, der Farbstabilität bei hohen Temperaturen, insbesondere aber wegen ihrer herausragender elektrischen Eigenschaften für Elektro- und Elektronikanwendungen, besonders geeignet. Allerdings stoßen thermoplastische Polyester wie PBT und PET wegen ihrer Schmelzpunkte von 220°C bzw. 260°C gerade bei Lötprozessen mit kurzzeitigen Spitzentemperaturen oberhalb dieser Schmelzpunkte rasch an ihre Grenzen.

Als thermoplastischer Polyester mit einem Schmelzpunkt von 285°C käme für das Wellenlöten prinzipiell das Poly(1,4-cyclohexylendimethylen)terephthalat (PCT) in Betracht.

So beschreibt WO 2007/033129 A1 temperaturbeständige Zusammensetzungen für LED-Fassungen auf Basis des PCT, sowie Titandioxid und Glasfasern. Problematisch sind hier allerdings die im Vergleich zu PBT oder PET geringeren mechanischen Eigenschaften des PCT und bedingt durch die langsamere Kristallisation dessen schwierigere Verarbeitbarkeit. Auch ist man aufgrund der vom hohen Schmelzpunkt bestimmten hohen Verarbeitungstemperaturen bei der Wahl geeigneter Additive sehr eingeschränkt, was insbesondere für den Bereich der Flammschutzmittel, ganz

besonders der thermisch häufig empfindlicheren halogenfreien Flammschutzmittel auf Stickstoff- und Phosphorbasis, gilt.

Aus WO 2010/049531 A1 sind als Beispiel für Elektro- und Elektronikanwendungen sogenannte Power-LEDs auf Basis aromatischer Polyester oder vollständig aromatischer Polyester bekannt, wodurch der Abbau des thermoplastischen Materials durch Hitze oder Strahlung verhindert werden soll. Der Einsatz dieser aromatischen Polyester oder vollständig aromatischen Polyester, insbesondere auf Basis von p-Hydroxybenzoesäure, Terephthalsäure, Hydrochinon oder 4,4'-Bisphenol und gegebenenfalls Isophthalsäure führt zu einer länger anhaltenden Leuchtkraft jener Power-LEDs. Nachteilig an den Polyestern der WO 2010/049531 A1 ist jedoch auch hier die hohe Verarbeitungstemperatur in der Schmelze die aufgrund der hohen Schmelzpunkte der beschriebenen Polymere bei Temperaturen von 355°C und höher liegen, ebenso wie die hohen Werkzeugtemperaturen von 175°C und höher. Hohe Verarbeitungs- und Werkzeugtemperaturen schränken die Auswahl weiterer Additive, insbesondere die Auswahl einsetzbarer Flammschutzmittel, ein und erfordern darüber hinaus speziell und kostenaufwändig ausgerüstete Spritzgussmaschinen, insbesondere bei Temperierung und Kühlung der Werkzeuge. Zudem führen hohe Verarbeitungstemperaturen zu erhöhtem Verschleiß der Spritzgusseinheit.

EP 2 472 603 A1 offenbart unter anderem Polyesterzusammensetzungen enthaltend 40-95 Gew.-% PCT, 1-20 Gew.-% Glasfasern, 1-20 Gew.-% Talkum sowie einen weiteren Polyester ausgewählt aus PBT, PET und einem flüssigkristallinen Polyester.

Die Aufgabe der vorliegenden Erfindung bestand deshalb darin, Zusammensetzungen auf Basis thermoplastischer Polyester zur Verfügung zu stellen, die zum einen eine gegenüber PBT und PET verbesserte Kurzzeitwärmeformbeständigkeit aufweisen, andererseits aber mit den für PBT bzw. PET niedrigen Temperaturen verarbeitbar sind, dadurch weniger Einschränkungen bei der Auswahl von Additiven, insbesondere Flammschutzmitteln, haben und gute mechanische Eigenschaften aufweisen.

Gute mechanische Eigenschaften im Sinne der vorliegenden Erfindung zeichnen sich im Falle herzustellender Erzeugnisse durch hohe Werte bei der Izod Schlagzähigkeit, durch hohe Biegefestigkeit und Randfaserdehnung aus. Die Schlagzähigkeit beschreibt die Fähigkeit eines Werkstoffes, Stoßenergie und Schlagenergie zu absorbieren ohne zu brechen. Die Prüfung der Izod Schlagzähigkeit nach ISO 180 ist eine Standard-Methode zur Bestimmung der Schlagzähigkeit von Materialien. Hierbei wird ein Arm zunächst in einer bestimmten Höhe gehalten (= konstante potentielle Energie) und schließlich freigegeben. Der Arm trifft auf die Probe wobei diese bricht. Von der Energie, die durch die Probe absorbiert wird, wird die Aufprallenergie bestimmt. Die Schlagzähigkeit wird berechnet als das Verhältnis aus Schlagarbeit und Probekörperquerschnitt (Maßeinheit $kJ/m^2$). Die Biegefestigkeit in der technischen Mechanik ist ein Wert für eine Biegespannung in einem auf Biegung beanspruchten Bauteil, bei dessen Überschreiten das Versagen durch Bruch des Bauteils eintritt. Sie beschreibt den Widerstand eines Werkstückes, welcher seiner Durchbiegung oder seinem Bruch entgegengesetzt wird. Im Kurzeit-Biegeversuch nach ISO 178 werden balkenförmige Probekörper vorzugsweise mit den Abmessungen 80 mm · 10 mm · 4mm an den Enden auf zwei Auflager gelegt und in der Mitte mit einem Biegestempel belastet. Aus den ermittelten Kräften und Durchbiegungen werden die Kennwerte für die Biegespannung und die Randfaserdehnung errechnet. (Bodo Carlowitz: Tabellarische Übersicht über die Prüfung von Kunststoffen, 6. Auflage, Giesel-Verlag für Publizität, 1992, S. 16-17).

Lösung der Aufgabe und Gegenstand der vorliegenden Erfindung ist die Verwendung von Zusammensetzungen enthaltend

a) 3 bis 30 Gew.-% Poly(1,4-cyclohexylendimethylen)terephthalat (PCT), wobei der Anteil an PCT bezogen auf die Summe aller enthaltener thermoplastischen Polymere in der Zusammensetzung im Bereich von 5 bis 40 Gew.-% liegt.

b) 15 bis 90 Gew.-% Polyethylenterephthalat (PET),

c) 5 bis 70 Gew.-% Glasfasern, und

d) 0,01 bis 10 Gew.-% Talkum, wobei die Summe aller Gewichtsprozente der Komponenten stets 100 ergibt, zur Steigerung der Kurzzeitwärmebeständigkeit von Erzeugnissen.

Bevorzugt werden von Komponente a) 5 bis 25 Gew..-%, besonders bevorzugt 10 bis 20 Gew..-% eingesetzt.Bevorzugt werden von Komponente b) 20 bis 70 Gew..-%, besonders bevorzugt 30 bis 60 Gew..-% eingesetzt.Bevorzugt werden von Komponente c) 10 bis 45 Gew..-%, besonders bevorzugt 15 bis 35 Gew..-% eingesetzt. Bevorzugt werden von Komponente d) 0,05 bis 5 Gew.-%, besonders bevorzugt 0,1 bis 2 Gew..-% eingesetzt.Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind.

In einer bevorzugten Ausführungsform betrifft die vorliegende Erfindung Zusammensetzungen enthaltend zusätzlich zu den Komponenten a), b), c) und d) noch e) 1 bis 50 Gew..-%, bevorzugt 5 bis 30 Gew..-%, besonders bevorzugt 10 bis 20 Gew.-% wenigstens eines Flammschutzmittels, wobei die Komponenten a, b, c) und d) soweit reduziert werden, dass die Summe aller Gewichtsprozente stets 100 ergibt.

In einer bevorzugten Ausführungsform enthalten die erfindungsgemäßen Zusammensetzungen zusätzlich zu den Komponenten a) bis e) oder anstelle von e) noch f) 0,01 bis 10 Gew.-%, bevorzugt 0, 1 bis 7 Gew.-%, besonders bevorzugt 0,5 bis 5 Gew.-% wenigstens eines Additivs mit mindestens zwei Epoxygruppen pro Molekül, wobei die übrigen Komponenten soweit reduziert werden, dass die Summe aller Gewichtsprozent stets 100 ergibt.

In einer bevorzugten Ausführungsform enthalten die erfindungsgemäßen Zusammensetzungen zusätzlich zu den Komponenten a) bis f) oder anstelle der Komponenten e) und/oder f) noch g) 0,01 bis 30 Gew.%, bevorzugt 1 bis 25 Gew.-%, besonders bevorzugt 5 bis 20 Gew.-% Titandioxid, wobei die übrigen Komponenten soweit reduziert werden, dass die Summe aller Gewichtsprozente stets 100 ergibt.

In einer bevorzugten Ausführungsform enthalten die erfindungsgemäßen Zusammensetzungen zusätzlich zu den Komponenten a) bis g) oder anstelle der Komponenten e) und/oder f) und/oder g) noch h) 0,01 bis 15 Gew.-%, bevorzugt 0,1 bis 10 Gew.-%, besonders bevorzugt 0,1 bis 5 Gew.-% wenigstens eines sonstigen, von den Komponenten c) bis g) unterschiedlichen Additivs, wobei die übrigen Komponenten soweit reduziert werden, dass die Summe aller Gewichtsprozente stets 100 ergibt.

Erfindungsgemäß wird ein Blend aus Komponente a) PCT (CAS No. 24936-69-4) und Komponente b) PET eingesetzt.. Bevorzugt einzusetzendes PCT weist eine intrinsische Viskosität im Bereich von ca. 30 $cm^3/g$ bis 150 $cm^3/g$, besonders bevorzugt 40 $cm^3/g$ bis 130 $cm^3/g$, insbesondere bevorzugt 60 $cm^3/g$ bis 120 $cm^3/g$ jeweils gemessen in Analogie zu ISO1628-1 in Phenol/o-Dichlorbenzol (1:1 Gew.-Teile) bei 25°C. Die intrinsische Viskosität [η] wird auch Grenzviskositätszahl oder Staudinger Index genannt, da sie erstens eine Stoffkonstante ist und zweitens in einem Zusammenhang mit dem Molekulargewicht steht. Sie gibt an, wie die Viskosität des Lösungsmittel durch den gelösten Stoff beeinflusst wird. Zur Bestimmung der intrinsischen Viskosität wird die folgende Definition verwendet:

$$[\eta] = \lim_{c\to 0} \frac{\eta_{sp}}{c} = \lim_{c\to 0} \frac{1}{c} \ln\left(\frac{\eta}{\eta_0}\right)$$

wobei c die Konzentration des gelösten Stoffs in g/ml, _0 die Viskosität des reinen Lösungsmittel und $\eta_{sp} = \frac{\eta}{\eta_0} - 1$ die spezifische Viskosität ist.

Das als Komponente b) einzusetzende PET ist ein Reaktionsprodukt aus aromatischen Dicarbonsäuren oder ihren reaktionsfähigen Derivaten, bevorzugt Dimethylestern oder Anhydriden, und aliphatischen, cycloaliphatischen oder araliphatischen Diolen und Mischungen dieser Edukte. PET läßt sich aus Terephthalsäure (oder ihren reaktionsfähigen Derivaten) und den jeweiligen aliphatischen Diolen mit 2 bzw. 4 C-Atomen nach bekannten Methoden herstellen (Kunststoff-Handbuch, Bd. VIII, S. 695 FF, Karl-Hanser-Verlag, München 1973).

Bevorzugt als Komponente b) einzusetzendes PET enthält mindestens 80 Mol-%, vorzugsweise mindestens 90 Mol-%, bezogen auf die Dicarbonsäure, Terephthalsäurereste und mindestens 80 Mol-%, vorzugsweise mindestens 90 Mol-%, bezogen auf die Diolkomponente, Ethylenglykolreste.

Bevorzugt als Komponente b) einzusetzendes PET kann neben Terephthalsäureresten bis zu 20 Mol-% Reste anderer aromatische Dicarbonsäuren mit 8 bis 14 C-Atomen oder Reste aliphatischer Dicarbonsäuren mit 4 bis 12 C-Atomen enthalten, bevorzugt Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure, oder Cyclohexandicarbonsäure.

Bevorzugt als Komponente b) einzusetzendes PET kann neben Ethylen- bzw. Butandiol-1,4-glykolresten bis zu 20 Mol-% anderer aliphatischer Diole mit 3 bis 12 C-Atomen oder cycloaliphatischer Diole mit 6 bis 21 C-Atomen enthalten. Bevorzugt sind Reste von Propandiol-1,3, 2-Ethylpropandiol-1,3, Neopentylglykol, Pentan-diol-1,5, Hexandiol-1.6, 3-Methylpentandiol-2,4, 2-Methylpentandiol-2,4, 2,2,4-Trimethylpentandiol-1,3 oder -1,6,2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-ß-hydroxyethoxyphenyl)-propan oder 2,2-Bis-(4-hydroxypropoxyphenyl)-propan (DE-A 24 07 674 (= US 4 035 958), DE-A 24 07 776, DE-A 27 15 932 (=US 4 176 224)).

In einer Ausführungsfom kann das erfindungsgemäß als Komponente b) einzusetzende PET durch Einbau relativ kleiner Mengen 3- oder 4-wertiger Alkohole oder 3- oder 4-basischer Carbonsäuren, wie sie z.B. in der DE-A 19 00 270 (= US-A 3 692 744) beschrieben sind, verzweigt werden. Bevorzugte Verzweigungsmittel sind Trimesinsäure, Trimellitsäure, Trimethylolethan und Trimethylolpropan und Pentaerythrit.

Das erfindungsgemäß einzusetzende PET besitzt bevorzugt eine intrinsische Viskosität von ca. 0,3 $cm^3/g$ bis

1,5 $cm^3/g$, besonders bevorzugt 0,4 $cm^3/g$ bis 1,3 $cm^3/g$, insbesondere bevorzugt 0,5 $cm^3/g$ bis 1,0 $cm^3/g$ jeweils gemessen in Phenol/o-Dichlorbenzol (1:1 Gew.-Teile) bei 25°C mittels eines Ubbelohde Viskosimeters.

Die Polyester der Komponente a) PCT und der Komponente b) PET können in einer Ausführungsform gegebenenfalls auch im Gemisch mit anderen Polyestern, insbesondere PBT, und/oder weiteren Polymeren eingesetzt werden. Die Herstellung von Polyestern der Komponenten a) und b) wird beispielsweise auch in Ullmanns Enzyclopädie der technischen Chemie, 4. Auflage, Band 19, Seiten 65 ff, Verlag Chemie, Weinheim 1980, beschrieben.

Die erfindungsgemäß als Komponente c) einzusetzenden Glasfasern haben bevorzugt einen Faserdurchmesser im Bereich von 7 und 18 $\mu$m, besonders bevorzugt im Bereich von 9 und 15 $\mu$m, und werden als Endlosfasern oder als geschnittene oder gemahlene Glasfasern zugesetzt. Die Fasern werden bevorzugt mit einem geeigneten Schlichtesystem und einem Haftvermittler bzw. Haftvermittlersystem, besonders bevorzugt auf Silanbasis, ausgerüstet.

Ganz besonders bevorzugte Haftvermittler auf Silanbasis für die Vorbehandlung sind Silanverbindungen der allgemeinen Formel (I)

$$(X\text{-}(CH_2)_q)k\text{-}Si\text{-}(O\text{-}CrH_2r+1)_4\text{-}k \qquad (I)$$

in der die Substituenten folgende Bedeutung haben:

X: $NH_2$-, HO-,

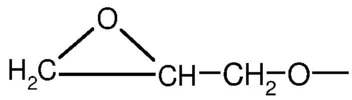

q: eine ganze Zahl von 2 bis 10, bevorzugt 3 bis 4,

r: eine ganze Zahl von 1 bis 5, bevorzugt 1 bis 2,

k: eine ganze Zahl von 1 bis 3, bevorzugt 1.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Glasfasern werden die Silanverbindungen bevorzugt in Mengen von 0,05 bis 2 Gew.-%, besonders bevorzugt 0,25 bis 1,5 Gew.-% und insbesondere 0,5 bis 1 Gew.-% bezogen auf die Glasfasern zur Oberflächenbeschichtung eingesetzt.

Die Glasfasern können bedingt durch die Verarbeitung zur Formmasse bzw. dem daraus herzustellenden Erzeugnis in der Formmasse bzw. im Erzeugnis einen kleineren d97-bzw. d50-Wert aufweisen, als die ursprünglich eingesetzten Glasfasern. Die Glasfasern können bedingt durch die Verarbeitung zur Formmasse bzw. Formkörper in der Formmasse bzw. im Formkörper kürzere Längenverteilungen als ursprünglich eingesetzt aufweisen.

Erfindungsgemäß wird als Komponente d) Talkum, bevorzugt mikrokristallines Talkum, eingesetzt. Talkum, auch als Talk bezeichnet, ist ein Schichtsilikat mit der chemischen Zusammensetzung $Mg_3[Si_4O_{10}(OH)_2]$, das je nach Modifikation als Talk-1A im triklinen oder als Talk-2M im monoklinen Kristallsystem kristallisiert (http://de.wikipedia.org/wiki/Talkum). Erfindungsgemäß bevorzugt einzusetzendes mikrokristallines Talkum kann beispielsweise als Mistron® R10 von Imerys Talc Group, Toulouse, Frankreich (Rio Tinto Group) bezogen werden.

Erfindungsgemäß wird als Komponente e) wenigstens ein Flammschutzmittel eingesetzt. Bevorzugte Flammschutzmittel sind handelsübliche organische Halogenverbindungen mit oder ohne Synergisten oder handelsübliche halogenfreie Flammschutzmittel auf Basis von organischen oder anorgansichen Phosphorverbindungen oder organischen Stickstoffverbindungen, einzeln oder im Gemisch.

Als halogenhaltige, insbesondere bromierte oder chlorierte, Verbindungen seien bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol oder bromierter Polyphenylenether genannt. Als Phosphorverbindungen sind die Phosphorverbindungen gemäß WO A 98/17720 (= US 6 538 024) geeignet, bevorzugt Metallphosphinate, insbesondere Aluminiumphosphinat oder Zinkphosphinat, Metallphosphonate, insbesondere Aluminiumphosphonat, Calciumphosphonat oder Zinkphosphonat sowie die entsprechenden Hydrate der Metallphosphonate, außerdem Derivate der 9,10-Dihydro-9-oxa-10-phos-phaphenanthren-10-oxide (DOPO-Derivate), Triphenylphosphat (TPP), Resorcinol-bis-(diphenylphosphat) (RDP), einschließlich Oligomere sowie Bisphenol-A-bis-diphenylphosphat (BDP) einschließlich Oligomere, Polyphosphonate (wie z.B. Nofia®

HM1100 der Fa. FRX Polymers, Chelmsford, USA) ferner Zink-bis(diethylphosphinat), Aluminium-tris(diethylphosphinat), Melaminphosphat, Melaminpyrophosphat, Melaminpolyphosphat, Melamin-poly(aluminiumphosphat), Melamin-poly(zinkphosphat) oder Phenoxyphosphazenoligomere und deren Mischungen. Als Stickstoffverbindungen kommen insbesondere Melamin oder Melamincyanurat und Reaktionsprodukte aus Trichlortriazin, Piperazin und Morpholin gemäß CAS-Nr. 1078142-02-5 (z.B. MCA PPM Triazin HF der MCA Technologies GmbH, Biel-Benken, Schweiz) in Frage. Als Synergisten sind bevorzugt Antimonverbindungen, insbesondere Antimontrioxid oder Antimonpentoxid, Zinkverbindungen, Zinnverbindungen, insbesondere Zinkstannat, oder Borate, insbesondere Zinkborate geeignet, wobei auch Kombination verschiedener Flammschutzmittel synergistisch eingesetzt werden können.

Auch können dem Flammschutzmittel sogenannte Kohlenstoffbildner wie z.B. Polyphenylenether und Antidrippingmittel wie Tetrafluorethylenpolymerisate zugesetzt werden Untern den halogenhaltigen Flammschutzmitteln werden besonders bevorzugt Ethylen-1,2-bistetrabromphthalimid, Tetrabrombisphenol-A-oligo¬carbonat, Polypentabrombenzylacrylat oder bromiertes Polystyrol wie z.B. Firemaster® PBS64 ( Great Lakes, West Lafayette, USA) jeweils in Kombination mit Antimontrioxid und/oder Aluminium-tris(dietylphosphinat) eingesetzt.

Unter den halogenfreien Flammschutzmitteln werden besonders bevorzugt Aluminiumtris(diethylphosphinat) in Kombination mit Melaminpolyphosphat (z.B. Melapur® 200/70 der BASF SE, Ludwigshafen, Deutschland) und/oder Melamincyanurat (z.B. Melapur® MC25 der BASF SE, Ludwigshafen, Deutschland) und/oder Phenoxyphosphazenoligomere (z.B. Rabitle® FP110 der Fushimi Pharmaceutical Co.m Ltd, Kagawa, Japan) eingesetzt.

Insbesondere ganz besonders bevorzugt wird als Flammschutzmittel Aluminium-tris(diethylphosphinat) eingesetzt, das als Exolit® OP1240 (CAS No 225789-38-8) von der Clariant International Ltd, Muttenz, Schweiz, vertrieben wird.

Erfindungsgemäß wird als Komponente f) wenigstens ein Additiv mit mindestens zwei Epoxygruppen pro Molekül eingesetzt. Bevorzugte Additive der Komponente f) werden aus der Reihe der Bisphenol-Diglycidylether ausgewählt. Bisphenol-Diglycidylether werden durch Reaktionen von Bisphenol-Derivaten mit Epichlorhydrin erhalten. Bevorzugte Bisphenol-Komponenten sind 2,2-Bis(4-hydroxyphenyl)propan (Bisphenol A), 1,1-Bis(4-hydroxyphenyl)-1-phenyl-ethan (Bisphenol AP), Bis(4-hydroxyphenyl)sulfon (Bisphenol S) und Bis(4-hydroxydiphenyl)methan (Bisphenol F), wobei Diglycidylether auf Basis Bisphenol-A besonders bevorzugt sind. Ganz besonders bevorzugt sind feste Bisphenol-A-Diglycidylether mit einem Erweichungspunkt oberhalb von 60°C wie z.B. das Araldite® GT7071 der Fa. Huntsman, Everberg, Belgien.

Das als Komponente g) einzusetzende Titandioxid hat bevorzugt eine mittlere Teilchengröße im Bereich von 90 nm bis 2000 nm. Für das erfindungsgemäß als Komponente g) einzusetzende Titandioxid kommen Titandioxid-Pigmente in Frage, deren Grundkörper nach dem Sulfat (SP)- oder Chlorid (CP)-Verfahren hergestellt sein können und die Anatas und / oder Rutilstruktur, bevorzugt Rutilstruktur haben. Der Grundkörper muss nicht stabilisiert sein, jedoch ist eine spezielle Stabilisierung bevorzugt: beim CP-Grundkörper durch eine Al- Dotierung von 0,3-3,0 Gew.-% (gerechnet als $Al_2O_3$) und einen Sauerstoffüberschuss in der Gasphase bei der Oxidation des Titantetrachlorids zu Titandioxid von mindestens 2 % ; beim SP-Grundkörper durch eine Dotierung z. B. mit Al, Sb, Nb oder Zn. Besonders bevorzugt, um eine hinreichend hohe Helligkeit der aus den Zusammensetzungen herzustellenden Erzeugnisse zu erhalten, ist eine "leichte" Stabilisierung mit Al bevorzugt, bzw. bei höheren Al-Dotierungsmengen eine Kompensation mit Antimon. Bei der Verwendung von Titandioxid als Weißpigment in Farben und Lacken, Kunststoffen usw. ist bekannt, dass durch UV-Absorption erzeugte unerwünschte fotokatalytische Reaktionen zur Zersetzung des pigmentierten Materials führen. Dabei absorbieren Titandioxid-Pigmente im nahen ultravioletten Bereich Licht, so dass Elektron-Loch-Paare entstehen, welche hochreaktive Radikale auf der Titandioxid-Oberfläche erzeugen. Die gebildeten Radikale haben in organischen Medien einen Bindemittelabbau zur Folge. Erfindungsgemäß bevorzugt wird zur Erniedrigung der Fotoaktivität des Titandioxids dieses anorganisch nachbehandelt, besonders bevorzugt mit Oxiden von Si und / oder Al und/oder Zr und / oder durch den Einsatz von Sn-Verbindungen.

Bevorzugt ist die Oberfläche von pigmentärem Titandioxid mit amorphen Ausfällungen von Oxidhydraten der Verbindungen $SiO_2$ und / oder $Al_2O_3$ und / oder Zirkonoxid bedeckt. Die $Al_2O_3$-Hülle erleichtert die Pigmentdispergierung in der Polymermartrix, die $SiO_2$-Hülle erschwert den Ladungsaustausch an der Pigmentoberfläche und verhindert dadurch den Polymerabbau.

Erfindungsgemäß wird das Titandioxid bevorzugt mit hydrophilen und/oder hydrophoben organischen Beschichtungen versehen, insbesondere mit Siloxanen oder Polyalkoholen.

Erfindungsgemäß als Komponente g) einzusetzendes Titandioxid weist bevorzugt eine mittlere Teilchengröße im Bereich von 90 nm bis 2000 nm, bevorzugt im Bereich von 200 nm bis 800 nm auf.

Kommerziell erhältliche Produkte sind beispielsweise Kronos® 2230, Kronos® 2225 und Kronos® vlp7000 der Fa. Kronos, Dallas, USA.

Erfindungsgemäß kann als Komponente h) wenigstens ein Additiv eingesetzt werden, das sich von den Komponenten c), d), e), f) und g) unterscheidet.

Übliche Additive der Komponente h) sind bevorzugt Stabilisatoren, Entformungsmittel, UV-Stabilisatoren, Thermostabilisatoren, Gammastrahlenstabilisatoren, Antistatika, Fließhilfsmittel, Flammschutzmittel, Elastomermodifikatoren, Säurefänger, Emulgatoren, Nukleierungsmittel, Weichmacher, Gleitmittel, Farbstoffe oder Pigmente. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

Als Stabilisatoren werden bevorzugt sterisch gehinderte Phenole und Phosphite, Hydrochinone, aromatische sekundäre Amine wie Diphenylamine, substituierte Resorcine, Salicylate, Benzotriazole und Benzophenone, sowie verschieden substituierte Vertreter dieser Gruppen oder deren Mischungen eingesetzt.

Bevorzugte Phosphite werden ausgewählt aus der Reihe Tris(2,4-ditert-butylphenyl)phosphit (Irgafos® 168, BASF SE, CAS 31570-04-4), Bis(2,4-di-tert-butylphenyl)pentaerythritol-diphosphit (Ultranox® 626, Chemtura ,CAS 26741-53-7), Bis(2,6-di-ter-butyl-4-methylphenyl)pentaerythritol-diphosphit (ADK Stab PEP-36, Adeka, CAS 80693-00-1), Bis(2,4-dicumylphenyl)pentaerythritol-diphosphit (Doverphos® S-9228, Dover Chemical Corporation, CAS 154862-43-8), Tris(nonylphenyl)phosphit (Irgafos® TNPP, BASF SE, CAS 26523-78-4), (2,4,6-tri-t-butylphenol)2-butyl-2-ethyl-1,3-propan-ediol-phosphit (Ultranox® 641, Chemtura, CAS 161717-32-4) oder Hostanox® P-EPQ eingesetzt.

Insbesondere bevorzugt wird als Phosphitstabilisator wenigstens Hostanox® P-EPQ (CAS No. 119345-01-6) der Clariant International Ltd., Muttenz, Schweiz eingesetzt. Dieses enthält das erfindungsgemäß insbesondere ganz besonders bevorzugt als Komponente d) einzusetzende Tetrakis(2,4-di-tert-butylphenyl)-1,1-biphenyl-4,4'-diylbisphosphonit (CAS No. 38613-77-3).

Als Säurefänger werden bevorzugt Hydrotalcit, Kreide, Zinkstannat und Böhmit eingesetzt.

Als bevorzugte Entformungsmittel wird wenigstens eines ausgewählt aus der Reihe Esterwachs(e), Pentaeritrytoltetrastearat (PETS), langkettige Fettsäuren, Salz(e) der langkettigen Fettsäuren, Amidderivat(e) der langkettigen Fettsäuren, Montanwachse sowie niedermolekulare Polyethylen- bzw. Polypropylenwachs(e) oder Ethylen Homopolymer Wachs(e).

Bevorzugte langkettige Fettsäuren sind Stearinsäure oder Behensäure. Bevorzugte Salze langkettiger Fettsäuren sind Calciumstearat oder Zinkstearat. Bevorzugtes Amidderivat langkettiger Fettsäuren ist Ethylen-bis-stearylamid. Bevorzugte Montanwachse sind Mischungen aus geradkettigen, gesättigten Carbonsäuren mit Kettenlängen von 28 bis 32 C-Atomen.

Als Farbstoffe oder Pigmente werden unabhängig von dem Titandioxid der Komponente c) weitere Farbstoffe bzw. Pigmente eingesetzt, z.B. um im Falle eines optoelektronischen Erzeugnisses dem von diesem auszusendenden Licht einen Farbton zu geben oder um das zu emittierende Licht mittels eines optischen Aufhellers zu verbessern.

Als Nukleierungsmittel werden bevorzugt Natrium- oder Calciumphenylphosphinat, Aluminiumoxid oder Siliziumdioxid eingesetzt.

Als Weichmacher werden bevorzugt Phthalsäuredioctylester, Phthalsäuredibenzylester, Phthalsäurebutylbenzylester, Kohlenwasserstofföle oder N-(n-Butyl)benzolsulfonamid eingesetzt.

Als Elastomermodifikator einzusetzendes Additiv wird bevorzugt eines oder mehrere Pfropfpolymerisat(e) E von

E.1 5 bis 95 Gew.-%, vorzugsweise 30 bis 90 Gew.-%, wenigstens eines Vinylmonomeren auf

E.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C eingesetzt.

Die Pfropfgrundlage E.2 hat im Allgemeinen eine mittlere Teilchengröße ($d_{50}$-Wert) von 0,05 bis 10 $\mu$m, vorzugsweise 0,1 bis 5 $\mu$m, besonders bevorzugt 0,2 bis 1 $\mu$m.

Monomere E.1 sind vorzugsweise Gemische aus

E.1.1 50 bis 99 Gew.-% Vinylaromaten und/oder kernsubstituierten Vinylaromaten (wie beispielsweise Styrol, $\alpha$-Methylstyrol, p-Methylstyrol, p-Chlorstyrol) und/oder Methacrylsäure-($C_1$-$C_8$)-Alkylester (wie z.B. Methylmethacrylat, Ethylmethacrylat) und/oder Glycidyl(meth)acrylat und

E.1.2 1 bis 50 Gew.-% Vinylcyanide (ungesättigte Nitrile wie Acrylnitril und Methacrylnitril) und/oder (Meth)Acrylsäure-($C_1$-$C_8$)-Alkylester (wie z.B. Methylmethacrylat, n-Butylacrylat, t-Butylacrylat) und/oder Glycidylmethacrylat und/oder Derivate (wie Anhydride und Imide) ungesättigter Carbonsäuren (beispielsweise Maleinsäureanhydrid und N-Phenyl-Maleinimid).

Bevorzugte Monomere E.1.1 sind ausgewählt aus mindestens einem der Monomere Styrol, $\alpha$-Methylstyrol, Glycidylmethacrylat und Methylmethacrylat, bevorzugte Monomere E.1.2 sind ausgewählt aus mindestens einem der Monomere Acrylnitril, Maleinsäureanhydrid und Methylmethacrylat.

Besonders bevorzugte Monomere sind E.1.1 Styrol und E.1.2 Acrylnitril.

Für die in den Elastomermodifikatoren einzusetztenden Pfropfpolymerisate geeignete Pfropfgrundlagen E.2

sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen E.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß E.1.1 und E.1.2), mit der Maßgabe, dass die Glasübergangstemperatur der Komponente E.2 unterhalb <10°C, vorzugsweise <0°C, besonders bevorzugt <-10°C liegt.

Besonders bevorzugt ist als Pfropfgrundlage E.2. reiner Polybutadienkautschuk.

Besonders bevorzugte Polymerisate E sind ABS-Polymerisate (Emulsions-, Masse- und Suspensions-ABS), wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage E.2 beträgt mindestens 30 Gew.-%, vorzugsweise mindestens 40 Gew.-% (in Toluol gemessen). ABS bedeutet Acrylnitril-Butadien-Styrol-Copolymerisat mit der CAS- Nummer 9003-56-9 und ist ein synthetisches Terpolymer aus den drei unterschiedlichen Monomerarten Acrylnitril, 1,3-Butadien und Styrol. Es gehört zu den amorphen Thermoplasten. Die Mengenverhältnisse können dabei variieren von 15-35 % Acrylnitril, 5-30 % Butadien und 40-60 % Styrol.

Die Elastomermodifikatoren bzw. Pfropfcopolymerisate E werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten E auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke basieren auf Propfgrundlagen E.2 die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren sind. Zu den bevorzugten polymerisierbaren Acrylsäureestern gehören $C_1$-$C_8$-Alkylester, bevorzugt Methyl-, Ethyl-, Butyl-, n-Octyl- und 2-Ethylhexylester; Halogenalkylester, vorzugsweise Halogen-$C_1$-$C_8$-alkyl-ester, insbesondere bevorzugt Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind beispielsweise Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Weitere geeignete Pfropfgrundlagen gemäß E.2 sind Silikonkautschuke mit pfropfaktiven Stellen, wie sie in den DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.

Unabhängig von der Komponente c) können als Additive zusätzliche Füll- und/oder Verstärkungsstoffe in den erfindungsgemäßen Zusammensetzungen enthalten sein.

Bevorzugt wird aber auch eine Mischung aus zwei oder mehr unterschiedlichen Füllstoffen und/oder Verstärkungsstoffen, insbesondere auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern eingesetzt. Bevorzugt werden mineralische teilchenförmige Füllstoffe auf der Basis von Glimmer, Silikat, Quarz, Wollastonit, Kaolin, amorphe Kieselsäuren, Magnesiumcarbonat, Kreide, Feldspat oder Bariumsulfat eingesetzt. Besonders bevorzugt werden erfindungsgemäß mineralische teilchenförmige Füllstoffe auf der Basis von Wollastonit oder Kaolin eingesetzt.

Besonders bevorzugt werden ferner auch nadelförmige mineralische Füllstoffe als Additiv eingesetzt. Unter

nadelförmigen mineralischen Füllstoffen wird erfindungsgemäß ein mineralischer Füllstoff mit stark ausgeprägtem nadelförmigen Charakter verstanden. Als Beispiel seien nadelförmige Wollastonite genannt. Bevorzugt weist das Mineral ein Länge : Durchmesser - Verhältnis von 2:1 bis 35:1, besonders bevorzugt von 3:1 bis 19:1, am meisten bevorzugt von 4:1 bis 12:1 auf. Die mittlere Teilchengröße der erfindungsgemäßen nadelförmigen Mineralien liegt bevorzugt bei kleiner 20 μm, besonders bevorzugt bei kleiner 15 μm, insbesondere bevorzugt bei kleiner 10 μm bestimmt mit einem CILAS GRANULOMETER.

Wie bereits oben bei der Komponente c) beschrieben, kann in einer bevorzugten Einsatzform der Füllstoff und/oder Verstärkungsstoff oberflächenmodifiziert sein, besonders bevorzugt mit einem Haftvermittler bzw. Haftvermittlersystem, insbesondere bevorzugt auf Silanbasis. Die Vorbehandlung ist jedoch nicht unbedingt erforderlich.

Für die Ausrüstung der als Additiv einzusetzenden Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d97- bzw. d50-Wert aufweisen, als die ursprünglich eingesetzten Füllstoffe.

In einer bevorzugten Ausführungsform betrifft die vorliegende Erfindung Zusammensetzungen enthaltend a) Poly(1,4-cyclohexylendimethylen)terephthalat, bevorzugt mit einer Viskosität von 110g/$cm^3$, PET, c) Glasfasern, d) Talkum und e) Aluminiumtris(diethylphosphinat).

In einer bevorzugten Ausführungsform betrifft die vorliegende Erfindung Zusammensetzungen enthaltend a) Poly(1,4-cyclohexylendimethylen)terephthalat (PCT), bevorzugt mit einer Viskosität von 110g/$cm^3$, b) Polyethylenterephthalat (PET), c) Glasfasern, d) Talkum, bevorzugt mikrokristalliner Talkum, e) Aluminium-tris(diethylphosphinat) und h) Pentaerythrit-tetrastearat.

Die vorliegende Erfindung betrifft aber auch die Verwendung der erfindungsgemäßen Zusammensetzungen in Form von Formmassen zur Herstellung kurzzeitwärmeformbeständiger Erzeugnisse, bevorzugt elektronischer und elektronischer Baugruppen und Komponenten, insbesondere bevorzugt optoelektronischer Erzeugnisse.

Zur Herstellung erfindungsgemäß für den Spritzguss oder für die Extrusion einzusetzende Formmassen erhält man indem man die einzelnen Komponenten der erfindungsgemäßen Zusammensetzungen vermischt, zu einem Strang austrägt, bis zur Granulierfähigkeit abkühlt und granuliert.

Bevorzugt erfolgt das Vermischen bei Temperaturen im Bereich von 260 bis 310°C, bevorzugt 270-300°C besonders bevorzugt bei 280-295°C in der Schmelze. Insbesondere bevorzugt wird hierzu ein Zweiwellenextruder eingesetzt.

In einer bevorzugten Ausführungsform wird das Granulat, das die erfindungsgemäße Zusammensetzung enthält, bei 120°C im Vakuumtrockenschrank oder im Trockenlufttrockner für ca. 2h getrocknet, bevor es dem Spritzguss oder einem Extrusionsverfahren zwecks Herstellung von Erzeugnissen unterzogen wird.

Die vorliegende Erfindung betrifft aber auch ein Verfahren zur Herstellung von Erzeugnissen, bevorzugt kurzzeitwärmeformbeständiger Erzeugnisse für die Elektro- oder Elektronikindustrie, besonders bevorzugt elektronischer oder elektrischer Baugruppen und Komponenten, wobei das Matrixmaterial als Formmasse enthaltend die erfindungsgemäßen Zusammensetzungen durch Spritzguss oder Extrusion, bevorzugt durch Spritzguss erhalten wird.

Die vorliegende Erfindung betrifft aber auch ein Verfahren zur Verbesserung der Kurzzeitwärmeformbeständigkeit Polyester-basierter Erzeugnisse, dadurch gekennzeichnet, dass man erfindungsgemäße Zusammensetzungen in Form von Formmassen durch Spritzguss oder Extrusion verarbeitet.

Die Verfahren des Spritzgusses sowie der Extrusion thermoplastischer Formmassen ist dem Fachmann bekannt.

Erfindungsgemäße Verfahren zur Herstellung von Erzeugnissen durch Extrusion oder Spritzguss arbeiten bei Schmelzetemperaturen im Bereich von 260 bis 330°C, bevorzugt von 270 bis 300°C, besonders bevorzugt von 280-290°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Bei der sequentiellen Coextrusion werden zwei unterschiedliche Materialien in alternierender Folge hintereinander ausgestoßen. Auf diese Weise entsteht ein Vorformling mit in Extrusionsrichtung abschnittsweise unterschiedlicher Materialzusammensetzung. Es können bestimmte Artikelabschnitte durch entsprechende Materialauswahl mit spezifisch erforderlichen Eigenschaften ausgestattet werden, beispielsweise für Artikel mit weichen Enden und hartem Mittelteil oder integrierten weichen Faltenbalg-Bereichen (Thielen, Hartwig, Gust, "Blasformen von Kunststoffhohlkörpern", Carl Hanser Verlag, München 2006, Seite 127-129).

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt.

Man unterscheidet

1. Plastifizieren / Aufschmelzen

2. Einspritzphase (Füllvorgang)

3. Nachdruckphase (wegen thermischer Kontraktion bei der Kristallisation)

4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Erzeugnis gefertigt. Notwendig dazu sind immer zwei Werkzeughälften. Beim Spritzguss unterscheidet man folgende Funktionskomplexe:

- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion ein endlos geformter Kunststoffstrang, hier ein Polyamid, im Extruder eingesetzt, wobei der Extruder eine Maschine zur Herstellung thermoplastischer Formstücke ist. Man unterscheidet Einschneckenextruder und Doppelschneckenextruder sowie die jeweiligen Untergruppen konventioneller Einschneckenextruder, förderwirksamer Einschneckenextruder, gegenläufiger Doppelschneckenextruder und gleichläufiger Doppelschneckenextruder.

Extrusionsanlagen bestehen aus Extruder, Werkzeug, Nachfolgeeinrichtung, Extrusionsblasformen. Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Die vorliegende Erfindung betrifft die Verwendung der Zusammensetzungen zur Steigerung der Kurzzeitwärmeformbeständigkeit von Erzeugnissen, bevorzugt von Erzeugnissen der Elektro- oder Elektronikindustrie, insbesondere elektronischen Erzeugnissen für Leiterplatten wie z.B. Gehäuse für Spulenkörper, Steckverbinder oder Kondensatoren und Leistungstransistoren sowie von optoelektronischen Erzeugnissen.

Die auf erfindungsgemäße Weise hergestellten Erzeugnisse eignen sich deshalb auch hervorragend für elektrische oder elektronische Erzeugnisse, bevorzugt optoelektronische Erzeugnisse, insbesondere LEDs oder OLEDs. Eine Leuchtdiode (auch Lumineszenz-Diode, englisch light-emitting diode, deutsch lichtemittierende Diode, LED) ist ein elektronisches Halbleiter-Bauelement. Fließt durch die Diode Strom in Durchlassrichtung, so strahlt sie Licht, Infrarotstrahlung (als Infrarotleuchtdiode) oder auch Ultraviolettstrahlung mit einer vom Halbleitermaterial und der Dotierung abhängigen Wellenlänge ab. Eine organische Leuchtdiode (englisch organic light emitting diode, OLED) ist ein dünnfilmiges leuchtendes Bauelement aus organischen halbleitenden Materialien, das sich von den anorganischen Leuchtdioden (LED) dadurch unterscheidet, dass Stromdichte und Leuchtdichte geringer sind und keine einkristallinen Materialien erforderlich sind. Im Vergleich zu herkömmlichen (anorganischen) Leuchtdioden lassen sich organische Leuchtdioden daher kostengünstiger herstellen, ihre Lebensdauer ist jedoch derzeit geringer als die herkömmlicher Leuchtdioden.

## Beispiele

Zur Herstellung der erfindungemäß beschriebenen Zusammensetzungen wurden die einzelnen Komponenten in einem Zweiwellenextruder (ZSK 26 Mega Compounder der Fa. Coperion Werner & Pfleiderer (Stuttgart, Deutschland

mit 3-Loch Düsenplatte und einem Düsenlochdurchmesser von 3mm) bei Temperaturen zwischen 280 und 295°C in der Schmelze vermischt, als Strang ausgetragen, bis zur Granulierfähigkeit abgekühlt und granuliert. Vor weiteren Schritten wurde das Granulat bei 120°C im Vakuumtrockenschrank für ca. 2h getrocknet. Dabei wurde die Verarbeitbarkeit in Abhängigkeit zur Temperatur qualitativ bewertet: "+" steht dabei für eine problemlose Verarbeitung, "o" für eine eingeschränkte Verarbeitbarkeit, z.B. wegen eines stark ansteigenden Düsendrucks oder der Zersetzung empfindlicher Additive.

Die Platten und Prüfkörper für die in der Tabelle 1 aufgeführten Untersuchungen wurden auf einer handelsüblichen Spritzgießmaschine bei einer Massetemperatur von 280-290°C und einer Werkzeugtemperatur von 80-120°C verspritzt. Eine Kenngröße für die Qualität des Spritzgießvorgangs war im Rahmen der vorliegenden Erfindung die Entformbarkeit: Für die Entformbarkeit ist eine schnelle Kristallisation vorteilhaft, um möglichst schnell und ohne Verformung das Erzeugnis aus dem Werkzeug auswerfen zu können. In den in Tabelle 1 dargestellten Beispielen und Vergleichsbeispielen steht "+" für eine gute, "o" für eine befriedigende und ,,-" für eine schlechte Entformbarkeit.

**Kurzzeitwärmeformbeständigkeit**

Der Test zur Bestimmung der Kurzzeitwärmeformbeständigkeit bzw. Lötbadbeständigkeit simuliert die Bedingungen des Wellenlötens wie folgt:
Aus einer Platte der mit einer Dicke von 1,0 mm wurden Prüfkörper der Abmaße 20 x 10 x 1 mm ausgeschnitten. Diese wurden für 15 min in einen mit der in Tabelle 1 angegebenen Temperatur beheizten handelsüblichen Heißluftofen verbracht. Anschließend wurde das Anschmelzverhalten der Probekörper visuell begutachtet. "+" steht dabei für eine Probe ohne visuell beobachtbares Anschmelzen, "o" für eine Probe mit abgerundeten Kanten und "-" für eine über die gesamte Oberfläche angeschmolzene Probe.

**Einsatzstoffe**

Komponente a: PCT [CAS-Nr. 24936-69-4] mit einer Viskosität von 110g/$cm^3$]

Komponente b: PET: Polyethylenterephthalat (Polyester Chips PET V004, Fa. Invista, Wichita, USA)

Komponente c: Mit silanhaltigen Verbindungen beschlichtete Glasfaser mit einem Durchmesser von 10 μm (CS 7967, Handelsprodukt der Lanxess N.V., Antwerpen, Belgien)

Komponente d: Talkum: Mistron® R10 der Imerys Talc Group, Toulouse, Frankreich (Rio Tinto Group)

Komponente e: Aluminium-tris(diethylphosphinat) Exolit® OP1240 der Clariant International Ltd., Muttenz, Schweiz

Komponente h: weitere für die Verwendung in Polyestern gebräuchliche Additive wie zum Beispiel Entformungsmittel (z.B. Pentaerythrit-tetrastearat (PETS)), Thermostabilisatoren (z.B. auf Basis von Phenylphosphiten). Art und Menge der als Komponente H zusammengefassten Additive stimmen in Art und Menge für Beispiele und Vergleichsbeispiele überein.

Es konnte gezeigt werden, dass bei thermisch empfindlichen Flammschutzmitteln wie Komponente e nur im Falle der erfindungsgemäßen Polyesterblends sowohl eine gute Verarbeitbarkeit und damit auch gute mechanische Daten als auch eine erhöhte Kurzzeitwärmeformbeständigkeit bei Temperaturen oberhalb des Schmelzpunktes von Komponente a gegeben ist. Dies ist eine wichtige Voraussetzung für Anwendungen, die wie z.B. Elektronikbauteile, kurzzeitig Lötbadtemperaturen bis 285°C ausgesetzt sein können.

**Patentansprüche**

**1.** Verwendung von Zusammensetzungen enthaltend

a) 3 bis 30 Gew.-% Poly(1,4-cyclohexylendimethylen)terephthalat (PCT), wobei der Anteil an PCT bezogen auf die Summe aller enthaltener thermoplastischen Polymere in der Zusammensetzung im Bereich von 5 bis 40 Gew.-% liegt.
b) 15 bis 90 Gew.-% Polyethylenterephthalat (PET),

c) 5 bis 70 Gew.-% Glasfasern, und

d) 0,01 bis 10 Gew.-% Talkum, wobei die Summe aller Gewichtsprozente der Komponenten stets 100 ergibt, zur Steigerung der Kurzzeitwärmebeständigkeit von Erzeugnissen.

**2.** Verwendung gemäß Anspruch 1, **dadurch gekennzeichnet, dass** die Zusammensetzungen zusätzlich zu den Komponenten a), b), c) und d) noch e) 5 bis 50 Gew.-% wenigstens eines Flammschutzmittels enthalten, wobei die Komponenten a, b, c) und d) soweit reduziert werden, dass die Summe aller Gewichtsprozente stets 100 ergibt.

**3.** Verwendung gemäß Anspruch 2, **dadurch gekennzeichnet, dass** als Flammschutzmittel organische Halogenverbindungen mit oder ohne Synergisten oder halogenfreie Flammschutzmittel auf Basis von organischen oder anorganischen Phosphorverbindungen oder organischen Stickstoffverbindungen, einzeln oder im Gemisch eingesetzt werden.

**4.** Verwendung gemäß Anspruch 3, **dadurch gekennzeichnet, dass** als organische Halogenverbindungen Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol oder bromierter Polyphenylenether eingesetzt werden.

**5.** Verwendung gemäß Anspruch 3, **dadurch gekennzeichnet, dass** als organische oder anorganische Phosphorverbindungen Metallphosphinate, insbesondere Aluminiumphosphinat oder Zinkphosphinat, Metallphosphonate, insbesondere Aluminiumphosphonat, Calciumphosphonat oder Zinkphosphonat sowie die entsprechenden Hydrate der Metallphosphonate, sowie Derivate der 9,10-Dihydro-9-oxa-10-phosphaphenanthren-10-oxide (DOPO-Derivate), Triphenylphosphat (TPP), Resorcinol-bis-(diphenylphosphat) (RDP), einschließlich Oligomere sowie Bisphenol-A-bis-diphenylphosphat (BDP) einschließlich Oligomere, Polyphosphonate, ferner Zink-bis(diethylphosphinat), Aluminium-tris(diethylphosphinat), Melaminphosphat, Melaminpyrophosphat, Melaminpolyphosphat, Melamin-poly(aluminiumphosphat), Melamin-poly(zinkphosphat) oder Phenoxyphosphazenoligomere und deren Mischungen eingesetzt werden.

**6.** Verwendung gemäß Anspruch 3, **dadurch gekennzeichnet, dass** als organische Stickstoffverbindungen Melamin oder Melamincyanurat und Reaktionsprodukte aus Trichlortriazin, Piperazin und Morpholin eingesetzt werden.

**7.** Verwendung gemäß Anspruch 3, **dadurch gekennzeichnet, dass** als Synergisten Antimonverbindungen, insbesondere Antimontrioxid oder Antimonpentoxid, Zinkverbindungen, Zinnverbindungen, insbesondere Zinkstannat, oder Borate, insbesondere Zinkborate, eingesetzt werden.

**8.** Verwendung gemäß Anspruch 5, **dadurch gekennzeichnet, dass** Aluminiumtris(diethylphosphinat) eingesetzt wird.

**9.** Verwendung gemäß einem der Ansprüche 1 bis 8, **dadurch gekennzeichnet, dass** diese zusätzlich zu den Komponenten a) bis e) oder anstelle der Komponenten e) noch f) 0,01 bis 15 Gew.-% wenigstens eines Additivs mit zwei Epoxygruppen pro Molekül enthalten, wobei die übrigen Komponenten soweit reduziert werden, dass die Summe aller Gewichtsprozent stets 100 ergibt.

**10.** Verwendung gemäß Anspruch 9, **dadurch gekennzeichnet, dass** Komponente f) aus der Reihe der Bisphenol-Diglycidylether, bevorzugt der 2,2-Bis(4-hydroxyphenyl)propan, 1,1-Bis(4-hydroxyphenyl)-1-phenyl-ethan, Bis(4-hydroxyphenyl)sulfon und Bis(4-hydroxydiphenyl)methan ausgewählt wird.

**11.** Verwendung gemäß einem der Ansprüche 1 bis 10, **dadurch gekennzeichnet, dass** diese zusätzlich zu den Komponenten a) bis f) oder anstelle der Komponenten e) und/oder f) noch g) 0,01 bis 1 Gew.-% Titandioxid enthalten, wobei die übrigen Komponenten soweit reduziert werden, dass die Summe aller Gewichtsprozente stets 100 ergibt.

**12.** Verwendung gemäß einem der Ansprüche 1 bis 11, **dadurch gekennzeichnet, dass** es sich um Erzeugnisse für die Elektro- oder Elektronikindustrie handelt.

## Claims

**1.** Use of compositions comprising

a) 3 to 30% by weight of poly(1,4-cyclohexylenedimethylene) terephthalate (PCT), where the proportion of PCT based on the sum total of all the thermoplastic polymers present in the composition is in the range from 5 to 40% by weight,
b) 15 to 90% by weight of polyethylene terephthalate (PET),
c) 5 to 70% by weight of glass fibres, and
d) 0.01 to 10% by weight of talc, where the sum total of all the percentages by weight of the components is always 100, for increasing the short-term heat distortion resistance of products.

**2.** Use according to Claim 1, **characterized in that** the compositions comprise, in addition to components a), b), c) and d), also e), 5 to 50% by weight of at least one flame retardant, in which case the levels of components a), b), c) and d) are reduced to such an extent that the sum total of all the percentages by weight is always 100.

**3.** Use according to Claim 2, **characterized in that** the flame retardants used are organic halogen compounds with or without synergists or halogen-free flame retardants based on organic or inorganic phosphorus compounds or organic nitrogen compounds, individually or in a mixture.

**4.** Use according to Claim 3, **characterized in that** the organic halogen compounds used are ethylene-1,2-bistetrabromophthalimide, decabromodiphenylethane, tetrabromobisphenol A epoxy oligomer, tetrabromobisphenol A oligocarbonate, tetrachlorobisphenol A oligocarbonate, polypentabromobenzyl acrylate, brominated polystyrene or brominated polyphenylene ether.

**5.** Use according to Claim 3, **characterized in that** the organic or inorganic phosphorus compounds used are metal phosphinates, especially aluminium phosphinate or zinc phosphinate, metal phosphonates, especially aluminium phosphonate, calcium phosphonate or zinc phosphonate and the corresponding hydrates of the metal phosphonates, and derivatives of the 9,10-dihydro-9-oxa-10-phosphaphenanthrene 10-oxides (DOPO derivatives), triphenyl phosphate (TPP), resorcinol bis(diphenyl phosphate) (RDP), including oligomers, and bisphenol A bis(diphenyl phosphate) (BDP) including oligomers, polyphosphonates, and also zinc bis(diethylphosphinate), aluminium tris(diethylphos-phinate), melamine phosphate, melamine pyrophosphate, melamine polyphosphate, melamine poly(aluminium phosphate), melamine poly(zinc phosphate) or phenoxyphosphazene oligomers and mixtures thereof.

**6.** Use according to Claim 3, **characterized in that** the organic nitrogen compounds used are melamine or melamine cyanurate and reaction products of trichlorotriazine, piperazine and morpholine.

**7.** Use according to Claim 3, **characterized in that** the synergists used are antimony compounds, especially antimony trioxide or antimony pentoxide, zinc compounds, tin compounds, especially zinc stannate, or borates, especially zinc borates.

**8.** Use according to Claim 5, **characterized in that** aluminium tris(diethylphosphinate) is used.

**9.** Use according to any of Claims 1 to 8, **characterized in that** they comprise, in addition to components a) to e) or instead of component e), also f) 0.01 to 15% by weight of at least one additive having two epoxy groups per molecule, in which case the levels of at least one of the other components are reduced to such an extent that the sum total of all the percentages by weight is always 100.

**10.** Use according to Claim 9, **characterized in that** component f) is selected from the group of the bisphenol diglycidyl ethers, preferably 2,2-bis(4-hydroxyphenyl)propane, 1,1-bis(4-hydroxyphenyl)-1-phenylethane, bis(4-hydroxyphenyl) sulfone and bis(4-hydroxydiphenyl)methane.

**11.** Use according to any of Claims 1 to 10, **characterized in that** they comprise, in addition to components a) to f) or instead of components e) and/or f), also g) 0.01 to 1% by weight of titanium dioxide, in which case the levels of at least one of the other components are reduced to such an extent that the sum total of all the percentages by weight is always 100.

**12.** Use according to any of Claims 1 to 11, **characterized in that** the products are for the electrical or electronics industry.

## Revendications

1. Utilisation de compositions contenant

   a) 3 à 30 % en poids de poly(1,4-cyclohexylène-diméthylène téréphtalate) (PCT), la proportion de PCT par rapport à la somme de tous les polymères thermoplastiques contenus dans la composition se situant dans la plage de 5 à 40 % en poids.
   b) 15 à 90 % en poids de poly(éthylène téréphtalate) (PET),
   c) 5 à 70 % en poids de fibres de verre, et
   d) 0,01 à 10 % en poids de talc,

   la somme de tous les pour cent en poids des composants étant toujours égale à 100, pour la l'augmentation de la résistance de produits à la chaleur de courte durée.

2. Utilisation selon la revendication 1, **caractérisée en ce que** les compositions contiennent en plus des composants a), b), c) et d) encore e) 5 à 50 % en poids d'au moins un agent ignifuge, les composants a), b), c) et d) étant réduits d'autant pour que la somme de tous les pour cent en poids soit toujours égale à 100.

3. Utilisation selon la revendication 2, **caractérisée en ce qu'**on utilise en tant qu'agent ignifuge des composés halogénés organiques avec ou sans synergistes ou des agents ignifuges sans halogènes, à base de composés phosphorés organiques ou inorganiques ou de composés azotés organiques, individuellement ou en mélange.

4. Utilisation selon la revendication 3, **caractérisée en ce qu'**on utilise en tant que composés halogénés organiques l'éthylène-1,2-bis-tétrabromophtalimide, le décabromodiphényléthane, un oligomère époxy de tétrabromobisphénol A, un oligocarbonate de tétrabromobisphénol A, un oligocarbonate de tétrachlorobisphénol A, le poly(acrylate de pentabromobenzyle), un polystyrène bromé ou un poly(oxyde de phénylène) bromé,

5. Utilisation selon la revendication 3, **caractérisée en ce qu'**on utilise en tant que composés phosphorés inorganiques ou organiques des phosphinates de métaux, en particulier le phosphinate d'aluminium ou le phosphinate de zinc, des phosphonates de métaux, en particulier le phosphonate d'aluminium, le phosphonate de calcium ou le phosphonate de zinc ainsi que les hydrates correspondants des phosphonates de métaux, ainsi que des dérivés des 9,10-dihydro-9-oxa-10-phosphaphénanthrène-10-oxydes (dérivés de DOPO), le phosphate de triphényle (TPP), le bis-(diphénylphosphate) de résorcinol (RDP), oligomères inclus, ainsi que le bis-diphénylphosphate de bisphénol A (BDP), oligomères inclus, des polyphosphonates, en outre le bis(diéthylphosphinate) de zinc, le tris(diéthylphosphinate) d'aluminium, le phosphate de mélamine, le pyrophosphate de mélamine, le polyphosphate de mélamine, la poly(phosphate d'aluminium)-mélamine, la poly(phosphate de zinc)-mélamine ou des oligomères de phénoxyphosphazène et des mélanges de ceux-ci.

6. Utilisation selon la revendication 3, **caractérisée en ce qu'**on utilise en tant que composés azotés organiques la mélamine ou le cyanurate de mélamine et des produits de réaction de trichlorotriazine, pipérazine et morpholine.

7. Utilisation selon la revendication 3, **caractérisée en ce qu'**on utilise en tant que synergistes des composés d'antimoine, en particulier le trioxyde d'antimoine ou le pentoxyde d'antimoine, des composés de zinc, des composés d'étain, en particulier le stannate de zinc, ou des borates, en particulier des borates de zinc.

8. Utilisation selon la revendication 5, **caractérisée en ce qu'**on utilise le tris(diéthylphosphinate) d'aluminium.

9. Utilisation selon l'une quelconque des revendications 1 à 8, **caractérisée en ce qu'**elles contiennent en plus des composants a) à e) ou au lieu des composants e) encore f) 0,01 à 15 % en poids d'au moins un additif comportant deux groupes époxy par molécule, les autres composants étant réduits d'autant pour que la somme de tous les pour cent en poids soit toujours égale à 100.

10. Utilisation selon la revendication 9, **caractérisée en ce que** le composant f) est choisi dans la série des éthers diglycidyliques de bisphénols, de préférence des 2,2-bis(4-hydroxyphényl)propane, 1,1-bis(4-hydroxy-phényl) -1-phényl-éthane, bis (4-hydroxyphényl)sulfone et bis(4-hydroxydiphényl)méthane.

11. Utilisation selon l'une quelconque des revendications 1 à 10, **caractérisée en ce qu'**elles contiennent en plus des composants a) à f) ou au lieu des composants e) et/ou f) encore g) 0,01 à 1 % en poids de dioxyde de titane, les

autres composants étant réduits d'autant pour que la somme de tous les pour cent en poids soit toujours égale à 100.

**12.** Utilisation selon l'une quelconque des revendications 1 à 11, **caractérisée en ce qu'**il s'agit de produits pour l'industrie électrique ou électronique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2007033129 A1
- WO 2010049531 A1
- EP 2472603 A1
- DE 2407674 A
- US 4035958 A
- DE 2407776 A
- DE 2715932 A
- US 4176224 A
- DE 1900270 A
- US 3692744 A
- WO 9817720 A
- US 6538024 B
- DE 2035390 A
- US 3644574 A
- DE 2248242 A
- GB 1409275 A
- US 4937285 A
- DE 3704657 A
- US 4859740 A
- DE 3704655 A
- US 4861831 A
- DE 3631540 A
- US 4806593 A
- DE 3631539 A
- US 4812515 A


### In der Beschreibung aufgeführte Nicht-Patentliteratur


- **BODO CARLOWITZ.** Tabellarische Übersicht über die Prüfung von Kunststoffen. Giesel-Verlag für Publizität, 1992, 16-17
- *CHEMICAL ABSTRACTS,* 24936-69-4
- Kunststoff-Handbuch. Karl-Hanser-Verlag, 1973, 695 FF
- **ULLMANNS.** Enzyclopädie der technischen Chemie. Verlag Chemie, 1980, vol. 19, 65 ff
- *CHEMICAL ABSTRACTS,* 1078142-02-5
- *CHEMICAL ABSTRACTS,* 225789-38-8
- **GÄCHTER ; MÜLLER.** Kunststoff-Additive. Hanser-Verlag, 1989
- **PLASTICS.** Additives Handbook. Hanser-Verlag, 2001
- *CHEMICAL ABSTRACTS,* 31570-04-4
- *CHEMICAL ABSTRACTS,* 26741-53-7
- *CHEMICAL ABSTRACTS,* 80693-00-1
- *CHEMICAL ABSTRACTS,* 154862-43-8
- *CHEMICAL ABSTRACTS,* 26523-78-4
- *CHEMICAL ABSTRACTS,* 161717-32-4
- *CHEMICAL ABSTRACTS,* 119345-01-6
- *CHEMICAL ABSTRACTS,* 38613-77-3
- **ULLMANN.** *Enzyklopädie der Technischen Chemie,* 1980, vol. 19, 280 ff
- *CHEMICAL ABSTRACTS,* 9003-56-9
- **THIELEN ; HARTWIG ; GUST.** Blasformen von Kunststoffhohlkörpern. Carl Hanser Verlag, 2006, 127-129